# EUROPÄISCHE PATENTSCHRIFT

(11) **EP 1 068 121 B1**
(45) Veröffentlichungstag und Bekanntmachung des Hinweises auf die Patenterteilung: **03.07.2002**
(21) Anmeldenummer: 99917873.4
(22) Anmeldetag: 26.03.1999
(51) Int. Cl.: B60T 8/36, B60T 13/68

(54) **ELEKTROMAGNETVENTIL**
ELECTROMAGNETIC VALVE
ELECTROVANNE

(30) Priorität: 31.03.1998 DE 19814304; 12.08.1998 DE 19836494
(43) Veröffentlichungstag der Anmeldung: 17.01.2001
(73) Patentinhaber: Continental Teves AG & Co. oHG, 60488 Frankfurt (DE)
(72) Erfinder: LINHOFF, Paul, D-61267 Neu-Anspach (DE); ROSENKRANZ, Kerstin, D-61389 Schmitten (DE)
(86) Internationale Anmeldenummer: EP9902071
(87) Internationale Veröffentlichungsnummer: WO9950117

(56) Entgegenhaltungen:
- DE-A- 19 529 724
- DE-A- 19 611 832
- DE-A- 19 624 377

## Beschreibung

Die Erfindung betrifft ein Elektromagnetventil in Patronenbauweise nach dem Oberbegriff des Patentanspruchs 1.

Aus der DE 196 24 377 A1 ist bereits ein derartiges Elektromagnetventil bekannt geworden, dessen Magnetkern, Magnetanker mit Ventilschließgli.ed und Ventilsitzkörper als in einem Ventilgehäuse vormontierte und voreingestellte Bauteile eine funktionsfähige Ventileinheit bilden. Das Ventilgehäuse weist einen domförmigen Hülsenabschnitt auf, der mit dem offenen, kragenförmigen Endbereich an einer in eine Bohrung des patronenförmigen Ventilgehäuses eingesetzten Stützscheibe anliegt. Die Bohrung ist von einem dickwandigen Ventilgehäuseabschnitt umgeben, der im Bereich des Kragens zu einer Außenverstemmung verformt ist.

Ein Nachteil ergibt sich bezüglich der Einstellung des Magnetankerhubs mittels eines im Magnetkern zu justierenden Einstellstift, bevor der Kragen in der Patrone verstemmt wird.

In der DE-A-195 29 724 wird ein Elektromagnetventil beschrieben, das in einem Ventilgehäuse einen Ventilkörper aufweist, der abhängig von der Ventilschaltstellung eines in Grundstellung am Ventilkörper anliegenden Ventilschließgliedes betätigbar ist, wozu ein im Ventilgehäuse geführter, von einer Feder beaufschlagter Mitnehmer mit dem Ventilkörper als auch mit einem stößelförmigen Fortsatz am Ventilschließglied in Eingriff steht.

Die Aufgabe der vorliegenden Erfindung ist es, ein Elektromagnetventil der eingangs genannten Art mit möglichst einfachen, kostengünstigen und sicheren Mitteln einzustellen, das sich durch einen miniaturisierten, besonders schlanken Aufbau auszeichnet.

Diese Aufgabe wird erfindungsgemäß für ein Elektromagnetventil der angegebenen Art mit den kennzeichnenden Merkmalen des Patentanspruchs 1 gelöst.

Weitere Merkmale, Vorteile und Anwendungsmöglichkeiten der Erfindung gehen im nachfolgenden aus der Beschreibung mehrerer Ausführungsbeispiele hervor.

Es zeigen:
- Fig. 1: eine erste Ausführungsform eines in Grundstellung elektromagnetisch nicht erregten, offenen 2/2-Wegeventils,
- Fig. 2: eine Abwandlung des in Fig. 1 gezeigten Elektromagnetventils im Bereich des Ventilsitzkörpers sowie am ventilgehäuseseitigen Ringteil,
- Fig. 3: ein in der Grundstellung magnetisch nicht erregtes, geschlossenes Elektromagnetventil, das gleichfalls als 2/2-Wegeventil ausgeführt ist.

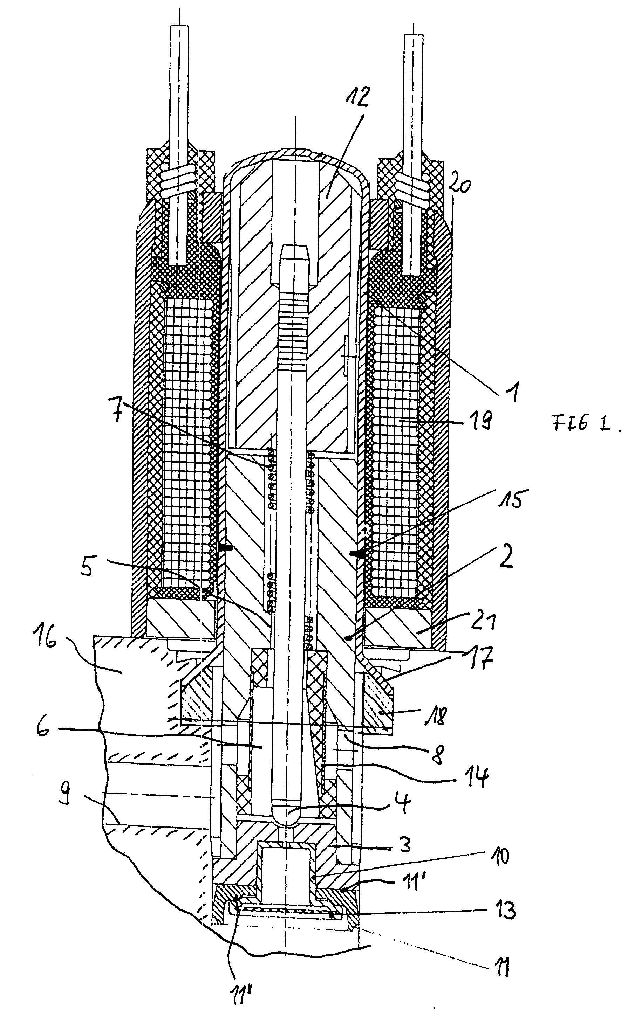

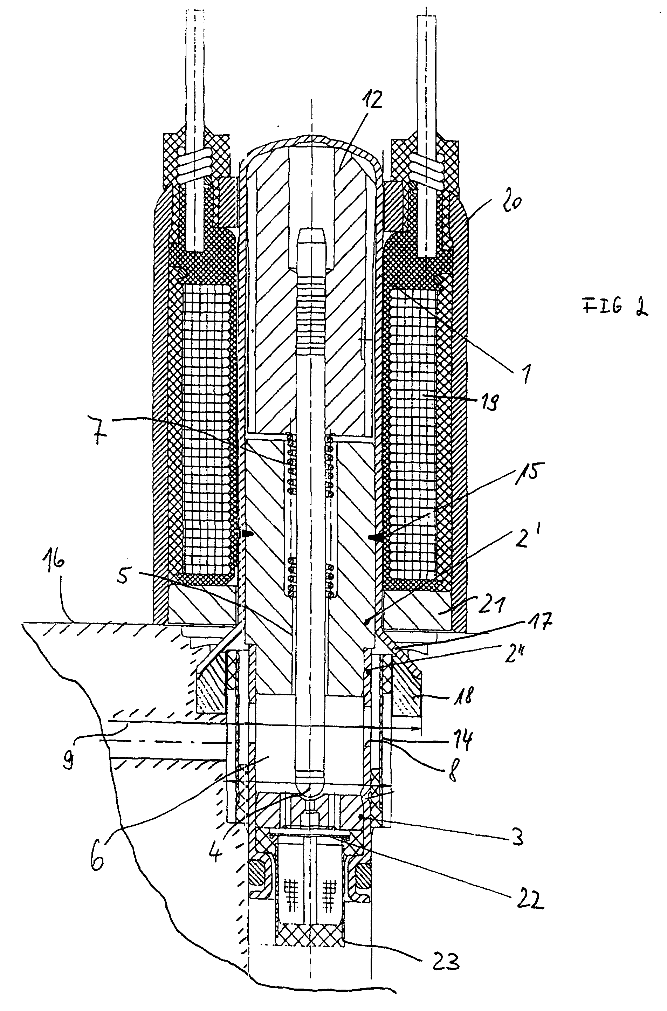

Die Fig. 1 zeigt in erheblich vergrößerter Darstellung ein im Längsschnitt gezeigtes Elektromagnetventil, dessen Magnetkern das erfindungswesentliche Ringteil 2 bildet, das als Patronenverschluß in den offenen Endbereich eines den Magnetanker 12 führenden Hülsenabschnitts 1 teleskopartig eingefügt ist, so daß durch das mehr oder weniger weite Hineinschieben des Ringteils 2 in den Hülsenabschnitt 1 der Magnetankerhub eingestellt werden kann. Entfernt vom Hülsenabschnitt 1 befindet sich am Ringteil 2 der Ventilsitzkörper 3, der in vorliegendem Ausführungsbeispiel auf Anschlag in das Ringteil 2 eingepreßt ist. Gemäß der Ausführungsform nach Fig. 1 weist der Ventilsitzkörper 3 eine Gehäusestufe auf, in die wiederum ein Blendentopf 10 eingepreßt ist, an dessen Mantelfläche eine Ringmanschette 11 geführt ist. Die Außen- und Innenschulter 11', 11" der Ringmanschette 11 sind zwischen den Stirnflächen des Ventilsitzkörpers 3 und des Blendentopfs 10 großflächig eingespannt. Dies hat den Vorteil, daß an der als Rückschlagventil wirksame Ringmanschette 11 beim Überströmen des Fluids entlang der Manschettenlippe keine unerwünschte Verformung der Ringmanschette 11 eintritt. Die unerwünschte Manschettenverformung wurde bisher durch besondere, den Strömungsquerschnitt behindernde Maßnahmen vermieden.

Wie aus der Fig. 1 hervorgeht, bildet somit der Blendentopf 10 mit dem Ventilsitzkörper 3 und der Rückschlagmanschette 11 eine Unterbaugruppe, die ohne besondere Einstellmaßnahmen auf Anschlag in das untere Ende des Ringteils 2 eingepreßt ist.

Zwecks Filtrierung des Druckmittelstroms ist in vorliegender Ausführung im Blendentopf 10 ein Plattenfilter vorgesehen, während im Bereich der Querbohrung 8 im Ringteil 2 ein Ringfilter 14 positioniert ist.

Die Einstellung des Elektromagnetventils beschränkt sich somit einerseits auf die Verschiebung des Magnetankers 12 auf dem stößelförmigen Abschnitt des Ventilschließgliedes 4, bis der gewünschte Restluftspalt zwischen den Stirnflächen des Magnetankers 12 und des diametralen Ringteils 2 erreicht ist, andererseits auf das Einschieben bzw. Einpressen des Ringteils 2 in den Hülsenabschnitt 1, bis der gewünschte Ventilhub erreicht ist. Danach ist zur Sicherung der Einstellage der Hülsenabschnitt 1 mit dem Ringteil 2 mittels einer Schweißnaht 15 verbunden. Damit ist eine besonders schlanke funktionsfähige Ventilpatrone hergestellt, die beispielsweise in eine Stufenbohrung eines blockförmigen Aufnahmekörpers 16 eingesetzt und im Bereich des am Hülsenabschnitt 1 aufgespreizten Kragens 17 verstemmt ist. Hierzu ist das Material des Aufnahmekörpers 16 im Bereich der Bohrungsstufe auf die geneigte Fläche des Kragens 17 mittels eines Außenverstemmwerkzeuges gepreßt, wobei zur Aufnahme der relativ hohen Verstemmkraft unterhalb des Kragens 17 in der Stufenbohrung die aus einem hochfesten Stahl bestehende Stützscheibe 18 angeordnet ist. Die Verwendung der Stützscheibe 18 ist dann angebracht, wenn der Aufnahmekörper 16 aus einem relativ weichen Werkstoff, beispielsweise aus einem Leichtmetall besteht. Bei Verwendung eines stählernen Aufnahmekörpers 16 kann zwangsläufig die Stützscheibe 18 entfallen. Unterhalb der Stützscheibe 18 verbindet die Querbohrung 8 die Stufenbohrung 6 mit dem Druckmittelpfad 9 im Aufnahmekörper 16, so daß in der abbildungsgemäßen Offenstellung des Elektromagnetventils eine ungehinderte hydraulische Verbindung zu einem sich unterhalb des Plattenfilters 13 fortsetzenden Druckmittelkanals hergestellt ist.

Ergänzend wird darauf verwiesen, daß der domartige Hülsenabschnitt 1 wie auch das Ringteil 2 aus einem ferritischem Stahl bestehen, womit eine gute Schweißbarkeit beider Teile gewährleistet ist. Abbildungsgemäß trägt der Hülsenabschnitt 1 eine Magnetventilspule 19, die mit ihrem Jochring 20 in Nähe des Kragens 17 eine Magnetschlußscheibe 21 kontaktiert.

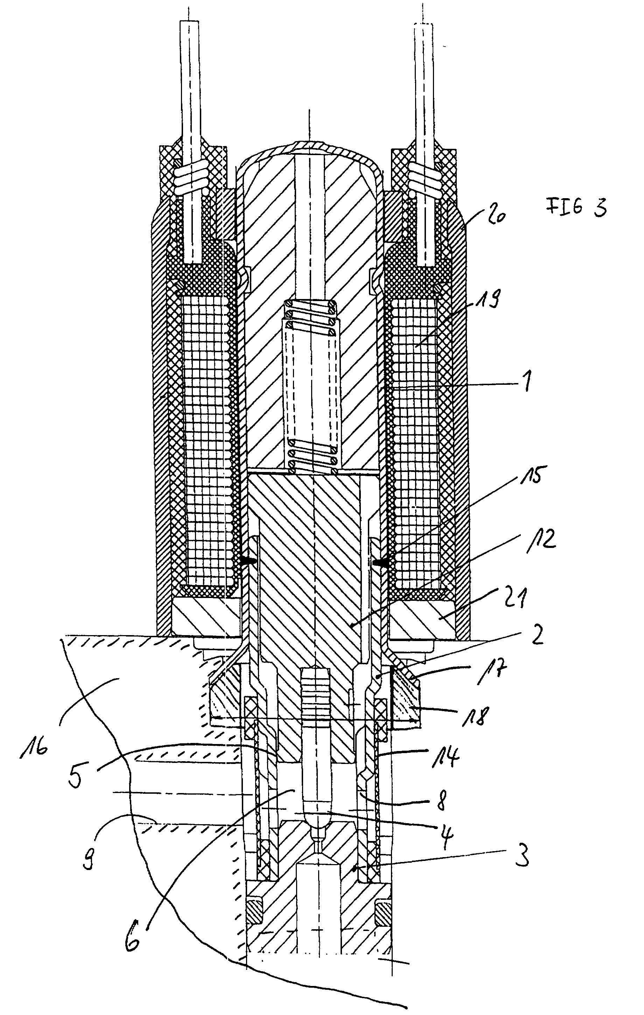

Unter Bezug auf die Merkmale des Elektromagnetventils nach Fig. 1 sollen nunmehr anhand der Fig. 2 die baulichen Unterschiede gegenüber Fig. 1 aufgezeigt werden. Entsprechend der Fig. 2 ist das die Ventilpatrone vervollständigende Ringteil 2 nunmehr zweiteilig ausgeführt, wobei das als Magnetkern ausgebildete dickwandige erste Ringteil 2' in das den Ventilsitzkörper 3 aufnehmenden dünnwandige zweite Ringteil 2" eingepreßt ist. Das dünnwandige zweite Ringteil 2" bildet hierbei eine Unterbaugruppe des Elektromagnetventils, bestehend aus dem innerhalb des zweiten Ringteils 2" befindlichen Ventilsitzkörper 3 sowie mit einem Unterhalb des Ventilsitzkörpers 3 im zweiten Ringteil 2" befindlichen Plattenrückschlagventil 22, das innerhalb eines Stabfilters 23 gelagert ist, das gleichfalls im zweiten Ringteil 2" integriert ist. Ein weiteres Unterscheidungsmerkmal gegenüber dem Elektromagnetventil nach Fig. 1 ist durch die Anordnung des Ringfilters 14 gegeben, der anstelle der Integration im Ringteil 2 nunmehr außen am zweiten Ringteil 2" angeordnet ist. Bezüglich der übrigen, bisher im Zusammenhang mit der Darstellung nach Fig. 2 noch nicht erwähnten Einzelheiten des Elektromagnetventils wird auf die bereits vorangegangenen Erläuterungen des Elektromagnetventils nach Fig. 1 verwiesen.

Beim Vergleich beider Ausführungsformen soll nicht unerwähnt bleiben, daß bezüglich der Details sich noch weitere Alternativen oder auch Kombinationen ergeben, die aber im Hinblick auf die Erfindung von untergeordneter Bedeutung sind.

Schließlich soll im nachfolgenden ein Ausführungsbeispiel zur Anwendung der Erfindung für ein in der Grundstellung magnetisch stromlos geschlossenes Elektromagnetventil nach Fig. 3 erläutert werden. Auch die Fig. 3 zeigt den aus den vorangegangenen Beispielen nach Fig. 1 und 2 erfindungswesentlichen Aufbau einer teleskopartig zusammengeführten Ventilpatrone, bestehend aus einem die Ventilspule 19 tragenden Hülsenabschnitt 1, in den ein dünnwandiges Ringteil 2 bis zum Erreichen des gewünschten Ventilhubes eingepreßt und anschließend verschweißt ist. Entsprechend der Funktion des Elektromagnetventils befindet sich im Dombereich des Hülsenabschnitts 1 ein Magnetkern, in dessen Stufenbohrung eine in Ventilschließrichtung wirksame Feder angeordnet ist, die sich an der Stirnfläche des Magnetankers 12 abstützt. Der Magnetanker 12 ist sowohl im Bereich des Hülsenabschnitts 1 als auch im Bereich des Ringteils 2 radial geführt, womit das Ventilschließglied 4 konzentrisch zum Ventilsitzkörper 3 ausgerichtet ist, der ebenso wie in der Darstellung nach Fig. 1 in den unteren Endbereich des Ringteils 2 eingepreßt ist. Am verjüngten Querschnittsbereich des Ringteils 2 befindet sich ein Ringfilter 14 auf Anschlag an einem Bund des Ventilsitzkörpers 3, womit die aus Fig. 2 ersichtliche untere Bohrungsstufe im Aufnahmekörper 16 entfallen kann. Es ergibt sich wie in Fig. 1 ein vergleichsweise gerader Bohrungsabschnitt im Aufnahmekörper 16, so daß sich die Abstufung der Ventilaufnahmebohrung im Aufnahmekörper 16 auf den Bereich der Verstemmstelle beschränkt. Bezüglich der Einzelheiten der Verstemmstelle und den übrigen Baugruppen wird daher auf die bereits erläuterte Fig. 1 verwiesen.

### Bezugszeichen

- 1: Hülsenabschnitt
- 2,2',2": Ringteil
- 3: Ventilsitzkörper
- 4: Ventilschließglied
- 5: Führungsabschnitt
- 6: Stufenbohrung
- 7: Rückstellfeder
- 8: Querbohrung
- 9: Druckmittelpfad
- 10: Blendentopf
- 11: Ringmanschette
- 11': Außenschulter
- 11": Innenschulter
- 12: Magnetanker
- 13: Plattenfilter
- 14: Ringfilter
- 15: Schweißnaht
- 16: Aufnahmekörper
- 17: Kragen
- 18: Stützscheibe
- 19: Ventilspule
- 20: Jochring
- 21: Magnetschlußscheibe
- 22: Plattenrückschlagventil
- 23: Stabfilter

## Patentansprüche

1. Elektromagnetventil in Patronenbauweise, dessen Magnetkern, Magnetanker (12) mit Ventilschließglied (4) und hülsenförmiges Ringteil (2), das einen Ventilsitzkörper (3) trägt und diesen konzentrisch gegenüber dem Ventilschließglied (4) in einem Ventilgebäuse ausrichtet, eine Funktionseinheit bilden, wobei das Ventilgehäuse einen Hülsenabschnitt (1) mit einem geschlossenen und einem offenen Endbereich aufweist, der im offenen Endbereich zur Befestigung im Ventilgehäuse einen Kragen (17) aufweist, **dadurch gekennzeichnet, daß** in den offenen Endbereich des Hülsenabschnitts (1) das hülsenförmige Ringteil (2) teleskopartig eingefügt und dort fixiert ist, wobei durch das teleskopartige mehr oder weniger weite Hineinschieben des Ringteils (2) in den Hülsenabschnitt (1) die Einstellung des Magnetankerhubs erfolgt.

2. Elektromagnetventil nach Anspruch 1, **dadurch gekennzeichnet, daß** das Ringteil (2) einen Führungsabschnitt (5) aufweist, der das Ventilschließglied (4) innerhalb des Ringteils (2) konzentrisch zum Ventilsitzkörper (3) ausrichtet.

3. Elektromagnetventil nach Anspruch 2, **dadurch gekennzeichnet, daß** das Ringteil (2) als Magnetkern ausgebildet ist, dessen Fübrungsabschnitt (5) durch den verengten Abschnitt einer Stufenbohrung (6) gebildet ist, die eine in Ventilöffnungssinn wirksame Rückstellfeder (7) aufnimmt.

4. Elektromagnetventil nach Anspruch 3, **dadurch gekennzeichnet, daß** das Ringteil (2) eine Querbohrung (8) aufweist, die eine hydraulische Verbindung zwischen einem zum Elektromagnetventil führenden Druckmittelpfad (9) und der vom Ventilsitzkörper (3) begrenzten Stufenbohrung (6) herstellt.

5. Elektromagnetventil nach Anspruch 1, **dadurch gekennzeichnet, daß** das Ringteil (2) zweiteilig ausgeführt ist, wobei das als Magnetkern ausgebildete dickwandige erste Ringteil (2') in das den Ventilsitzkörper (3) aufnehmende dünnwandige zweite Ringteil (2") eingepreßt ist.

6. Elektromagnetventil nach Anspruch 1 oder 2, **dadurch gekennzeichnet, daß** das Ringteil (2) aus einem magnetisierbaren, vorzugsweise ferritischen Werkstoff besteht.

7. Elektromagnetventil nach Anspruch 1, **dadurch gekennzeichnet, daß** in einer Gehäusestufe des Ventilsitzkörpers (3) ein Blendentopf (10) eingepreßt ist, auf dessen Mantelfläche eine Ringmanschette (11) geführt ist, deren Außen- und Innenschulter (11', 11") zwischen den Stirnflächen des Ventilsitzkörpers (3) und des Blendentopfs (10) großflächig eingespannt sind.

## Claims

1. Electromagnetic valve of a cartridge-type construction comprised of a magnetic core, a magnetic armature (12) with valve closure member (4) and a sleeve-shaped annular part (2) that carries a valve seat member (3) and aligns the latter concentrically in relation to the valve closure member (4) in a valve housing, which form an operative unit, the said valve housing including a sleeve portion (1) with a closed and an open end area which has a collar (17) in the open end area for attachment in the valve housing,
**characterized in that** inserted telescopically into the open end area of the sleeve portion (1) and fixed therein is the sleeve-shaped annular part (2), with the adjustment of the magnetic armature stroke being effected by telescopically slipping the annular part (2) more or less far into the sleeve portion (1).

2. Electromagnetic valve as claimed in claim 1,
**characterized in that** the annular part (2) includes a guiding portion (5) which aligns the valve closure member (4) within the annular part (2) concentrically in relation to the valve seat member (3).

3. Electromagnetic valve as claimed in claim 2,
**characterized in that** the annular part (2) is configured as a magnetic core having a guiding portion (5) that is provided by the constricted portion of a stepped bore (6) accommodating a resetting spring (7) active in the valve opening sense.

4. Electromagnetic valve as claimed in claim 3,
**characterized in that** the annular part (2) includes a transverse bore (8) which establishes a hydraulic connection between a pressure fluid conduit (9) that leads to the electromagnetic valve and the stepped bore (6) limited by the valve seat member (3).

5. Electromagnetic valve as claimed in claim 1,
**characterized in that** the annular part (2) has a two-part design, with the thick-walled first annular part (2') configured as a magnetic core being press fitted into the thin-walled second annular part (2") in which the valve seat member (3) is accommodated.

6. Electromagnetic valve as claimed in claim 1 or claim 2,
**characterized in that** the annular part (2) is made of a magnetizable, preferably ferritic material.

7. Electromagnetic valve as claimed in claim 1,
**characterized in that** a diaphragm retainer (10) is press fitted into a housing step of the valve seat member (3), and at the peripheral surface of the said retainer an annular gasket (11) is guided having outside and inside shoulders (11', 11") which are compressed over a large surface between the end surfaces of the valve seat member (3) and the diaphragm retainer (10).

## Revendications

1. Electrovanne de type cartouche dont le noyau magnétique, l'induit magnétique (12) avec obturateur de vanne (4) et partie annulaire (2) en forme de douille qui supporte un corps de siège de vanne (3) et oriente celui-ci concentriquement par rapport à l'obturateur de vanne (4) dans un boîtier de vanne, forment une unité fonctionnelle, le boîtier de vanne comportant une portion de douille (1) avec une zone de terminaison fermée et une zone de terminaison ouverte, qui comporte une collerette (17) dans la zone de terminaison ouverte pour la fixation dans le boîtier de vanne, **caractérisée en ce que** dans la zone de terminaison ouverte de la portion de douille (1), la partie annulaire (2) en forme de douille est insérée de manière télescopique et y est fixée, le fait d'enfoncer plus ou moins loin, de manière télescopique, la partie annulaire (2) dans la portion de douille (1) provoquant le réglage de la course de l'induit magnétique.

2. Electrovanne selon la revendication 1, **caractérisée en ce que** la partie annulaire (2) comporte un tronçon de guidage (5) qui oriente l'obturateur de vanne (4) à l'intérieur de la partie annulaire (2), concentriquement au corps de siège de vanne (3).

3. Electrovanne selon la revendication 2, **caractérisée en ce que** la partie annulaire (2) est réalisée en tant que noyau magnétique dont le tronçon de guidage (5) est formé par le tronçon rétréci d'un trou étagé (6) qui reçoit un ressort de rappel (7), agissant dans le sens d'ouverture de la vanne.

4. Electrovanne selon la revendication 3, **caractérisée en ce que** la partie annulaire (2) présente un trou transversal (8) qui réalise une liaison hydraulique entre une voie de fluide sous pression (9) menant à l'électrovanne, et le trou étagé (6) limité par le corps de siège de vanne (3).

5. Electrovanne selon la revendication 1, **caractérisée en ce que** la partie annulaire (2) est en deux parties, la première partie annulaire (2') à paroi épaisse, réalisée en tant que noyau magnétique, étant pressée à l'intérieur de la deuxième partie annulaire (2") à paroi mince, qui reçoit le corps de siège de vanne (3).

6. Electrovanne selon la revendication 1 ou 2, **caractérisée en ce que** la partie annulaire (2) est constituée d'une matière magnétisable, de préférence ferritique.

7. Electrovanne selon la revendication 1, **caractérisée en ce que** dans un étage de palier du corps de siège de vanne (3) est pressé un pot-diaphragme (10) sur la surface d'enveloppe duquel est guidé un manchon annulaire (11) dont l'épaulement extérieur (11') et l'épaulement intérieur (11") sont serrés sur une grande surface entre les surfaces frontales du corps de siège de vanne (3) et celles du pot-diaphragme (10).
